Europäisches Patentamt

European Patent Office

Office européen des brevets

(19)

(11) Veröffentlichungsnummer: **0 476 458 A1**

(12) **EUROPÄISCHE PATENTANMELDUNG**

(21) Anmeldenummer: **91115090.2**

(22) Anmeldetag: **06.09.91**

(51) Int. Cl.5: **F16H 1/40**

(30) Priorität: **17.09.90 AT 1876/90**

(43) Veröffentlichungstag der Anmeldung:
**25.03.92 Patentblatt 92/13**

(84) Benannte Vertragsstaaten:
**DE FR GB IT**

(71) Anmelder: **STEYR-DAIMLER-PUCH
AKTIENGESELLSCHAFT
Franz-Josefs-Kai 51
A-1010 Wien(AT)**

(72) Erfinder: **Mohorko, Eduard, Dipl.-Ing.
St. Peter Strasse 45
A-8071 Hausmannstätten(AT)**

(54) **Kegelradgetriebe mit Tellerradabstützung.**

(57) Ein aus einen in einem Gehäuse untergebrachten Ritzel und einem Tellerad bestehendes Kegelradgetriebe verfügt über eine Abstützvorrichtung zum Schutz des Tellerrades bei Überlast. Um eine genaue und verschleißfreie Wirkung dieser Abstützvorrichtung zu erreichen, besteht diese aus einer Rolle 17, die mittels eines Bolzens 20 im Gehäuse 1 abgestützt ist. Der Bolzen 20 weist einen in einer Gehäuserippe 28 abgestützten Kopfteil 22 und einem das Gehäuse 1 durchdringenden Schaftteil 23 auf, zwischen denen sich ein exzentrischer Mittelteil 21 befindet, der die genaue Einstellung des Spieles 18 zwischen der Rolle 17 und dem Tellerrad 5 gestattet. Vorteilhafterweise ist die Rolle 17 nur ein Wälzlager.

Fig 1

Die Erfindung handelt von einem Kegelradgetriebe, das aus einem Ritzel und einem Tellerrad besteht, welche von einem Gehäuse umgeben sind, wobei in der Nähe des Ritzels hinter dem Tellerrad eine Abstutzvorrichtung vorgesehen ist.

Bei Kegelradgetrieben entstehen durch den Eingriff des Trieblings im Tellerrad quer zu dessen Ebene gerichtete Kräfte, die mit dem übertragenen Drehmoment linear ansteigen. Das trifft für Kegelräder im weitesten Sinne zu, also beispielsweise auch für bogen-, spiral- oder hypoidverzahnte Kegelräder.

Diese quer gerichteten Kräfte im Tellerrad führen bei hohem Drehmoment zur Überbelastung der Lager oder zur Verformung des Tellerrades, wodurch sich der Eingriff verschlechtert und die Zähne beschädigt werden, soferne Lager oder Tellerrad nicht überhaupt zu Bruch gehen.

Diese Gefahren bestehen vor allem bei leicht gebauten Kegelradgetrieben während Belastungsspitzen, z. B. bei leichten Geländefahrzeugen, besonders wenn diese von nicht geländegängigen Großserienfahrzeugen abgeleitet sind.

Aus dem Buch "Das Wälzlager im Kraftfahrzeug", herausgegeben von FAG unter der Publikationsnummer 05100, Seite 181, ist es bekannt, zur Vermeidung dieser Schäden eine Abstützvorrichtung vorzusehen, die aus einem quer zur Tellerradebene eingeschraubten Bolzen besteht, dessen vorderes Ende vom Rücken des Tellerrades einen Abstand aufweist, der so eingestellt ist, daß das Tellerrad den Bolzen bei normaler Belastung nicht berührt. Bei Zurückweichen des Tellerrades durch eine Belastungsspitze berührt dieses den Bolzen und wird so an weiterem Zurückweichen gehindert. Da solche Belastungsspitzen aber nur selten bei Stillstand des Fahrzeuges und meist während der Fahrt auftreten, entsteht durch die schleifende Abstützung Verschleiß, Reibungswärme und Geräusch. Außerdem werden durch das Schleifen auf den Bolzen auch erhebliche Querkräfte ausgeübt, die zu dessen Lockern und Unwirksamwerden führen können.

Es ist somit Aufgabe der Erfindung, eine Abstützvorrichtung zu schaffen, die diese Nachteile vermeidet und eine reibungslose und verschleißlose Abstützung des Tellerrades gestattet, die möglichst fein und zuverlässig einstellbar ist.

Erfindungsgemäß wird das dadurch erreicht, daß die Abstützvorrichtung aus einer im Gehäuse drehbar gelagerten Rolle und einer Rollbahn auf der Rückseite des Tellerrades oder eines Teiles des Tellerrades besteht, wobei zwischen der Rolle und der Rollbahn bei unbelastetem Getriebe ein Spiel herrscht.

Durch die Rolle wird das Tellerrad bei Überbelastung ohne Reibung, Verschleiß oder Geräusch unterstützt. Wegen dieser verschleißlosen Wirkung kann das Spiel zwischen Abstützvorrichtung und Tellerrad sehr klein gewählt werden, sodaß bereits bei geringer Überlast - somit also relativ oft - die Abstützung wirksam wird.

In Weiterbildung der Erfindung ist die Rolle auf dem exzentrischen Mittelabschnitt eines Bolzens gelagert, dessen beide Enden im Gehäuse abgestützt sind, wobei ein mit einem Gewinde versehenes Ende aus dem Gehäuse herausragt. Der exzentrische Mittelabschnitt gestattet die feine Einstellung des Spieles zwischen Rolle und Tellerrad durch Verdrehen des Bolzens. Durch die beidseitige Abstützung des Bolzens können große Stützkräfte aufgenommen werden. Das aus dem Gehäuse herausragende Ende schließlich gestattet die Einstellung des Spieles von außen ohne Öffnen des Gehäuses, wobei der Bolzen dann mit Hilfe des Gewindes in der eingestellten Stellung festgezogen werden kann.

In Abwandlung der Erfindung ist es auch möglich, die Rolle konisch und deren Achse geneigt auszubilden, wodurch besseres Abrollen der Rolle auf dem Tellerrad und gegebenenfalls bessere Zugänglichkeit des Bolzens zur Spielverstellung erreicht werden.

In einer besonders vorteilhaften und billigen Weiterbildung der Erfindung wirkt der Außenring eines Wälzlagers als Rolle. Dadurch ist bei dem meist konstruktiv begrenzten Durchmesser der Rolle eine Lagerung mit maximaler Tragfähigkeit gesichert, zudem durch ein billiges, einfaches und leicht zu montierendes Maschinenelement.

Im folgenden wird die Erfindung anhand von Abbildungen erläutert:

Fig. 1     zeigt ein erfindungsgemäßes Kegelradgetriebe im Horizontalschnitt.

Fig. 2     vergrößert das Detail A der Fig. 1.

Fig. 3     zeigt eine Abwandlung des erfindungsgemäßen Kegelradgetriebes.

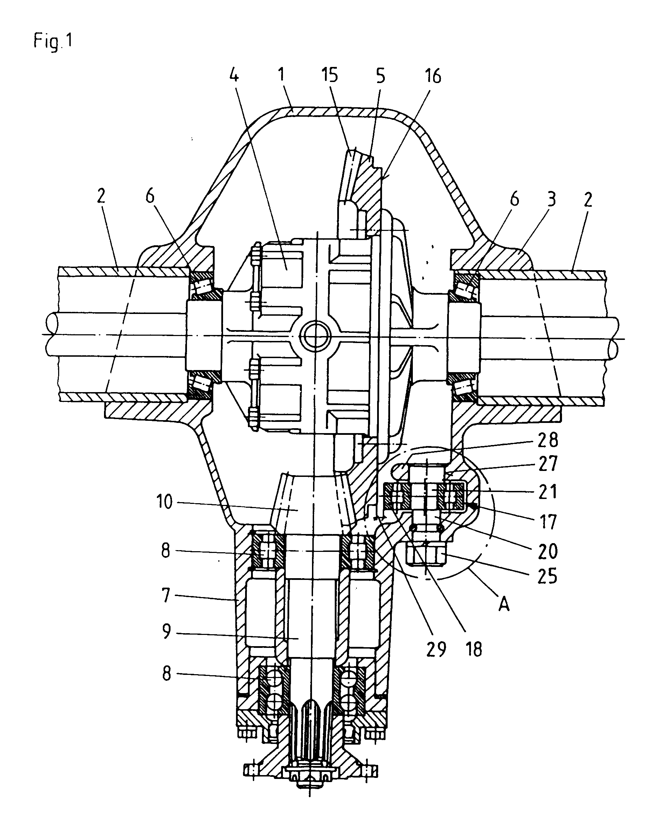

In Fig. 1 bezeichnet 1 das Gehäuse beispielsweise einer Hinterachse eines Kraftfahrzeuges mit beiderseits einem Achsrohr 2 und Lagerflanschen 3, in dem ein Differentialgehäuse 4, an dem ein Tellerrad 5 befestigt ist, in Lagern 6 abgestützt ist. An der Vorderseite des Gehäuses 1 ist ein Lagerrohr 7 ausgebildet, in dem in Lagern 8 ein Triebling 9 geführt ist, der in einem Kegelrad 10 beliebiger Verzahnungsart endet, das in das Tellerrad 5 eingreift.

Das Tellerrad 5 weist an seiner Vorderseite eine entsprechende Verzahnung 15 und an seiner Rückseite eine Rollbahn 16 auf, der eine Rolle 17 als Abstützvorrichtung zugeordnet ist. Die Rolle 17 ist so angeordnet, daß sie das Tellerrad genau dort unterstützt, wo auf dessen anderer Seite die Zahnkräfte des Kegelrades 10 wirken.

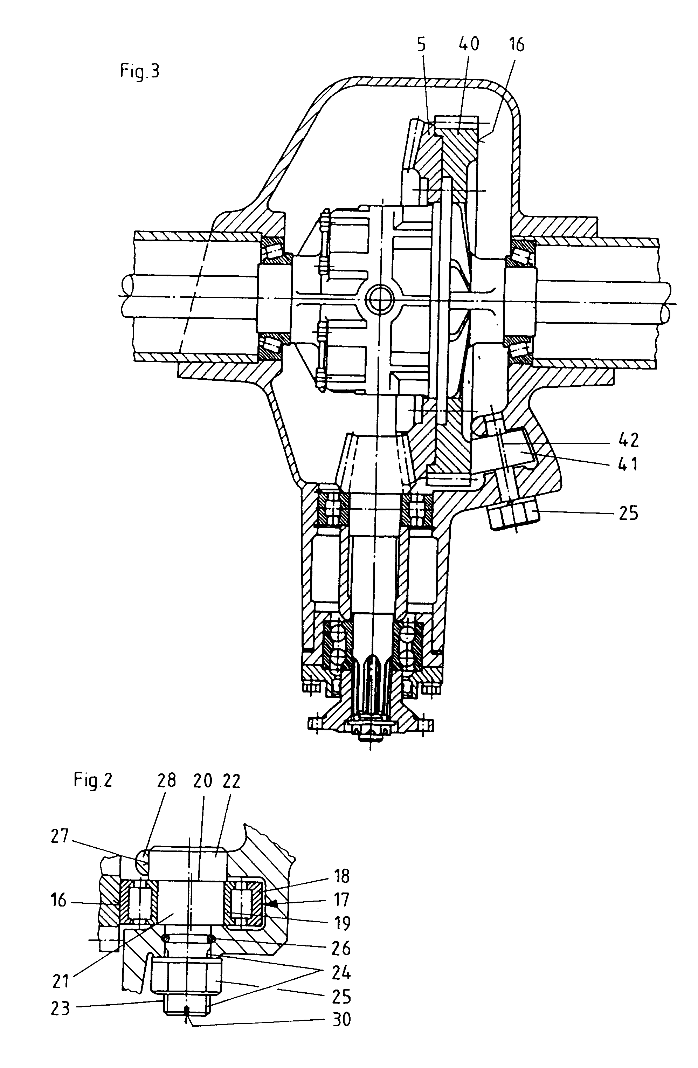

In Fig. 2 ist die Rolle 17 und deren Abstützung genauer abgebildet. Die Rolle 17 besteht hier aus einem Wälzlager, dessen Außenring 18 gleichzeitig als Rolle dient, und dessen Innenring 19 am exzentrischen Mittelabschnitt 21 eines Bolzens 20 sitzt, insbesondere aufgepreßt ist. Der exzentrische Mittelabschnitt gestattet es, das Spiel 29 zwischen der Rolle 17 und der Rollbahn 16 bis auf Null zu variieren. In diesem Extremfall wäre die Abstützung dann dauernd wirksam. Ein Endabschnitt 22 des Bolzens 20 ist als Kopf ausgebildet, der gleichzeitig als Anschlag für den Innenring 19 dient und sich in einer Bohrung 27 einer Gehäuserippe 28 abstützt. Der äußere Endabschnitt 22 des Bolzens 20 ist ein Schaft, der die Gehäusewand durchdringt und gegenüber dieser mit einem O-Ring 26 abgedichtet ist und dessen äußerer Teil mit einem Gewinde 24 versehen ist. Durch eine geringe Exzentrizität des Mittelabschnittes gegenüber den Endabschnitten des Bolzens 20 ist eine sehr genaue Einstellung des Spieles 29 zwischen dem Außenring 18 und der Rollbahn 16 möglich. Dabei ist zu beachten, daß der Durchmesser des Endabschnittes 23 so gewählt ist, daß das Wälzlager 17 trotz der Exzentrizität von dieser Seite aufgepreßt werden kann.

Zum Einstellen des Spieles 29 ist der Bolzen an seiner äußeren Endfläche beispielsweise mit einem Schlitz 30 versehen, in den ein Schraubenzieher oder ein Präzisionswerkzeug eingreifen kann. Wenn bei einer bestimmten Winkelstellung das richtige Spiel eingestellt ist, wird die Mutter 25 festgezogen.

In Fig. 3 ist schließlich eine Variante dargestellt. Der Unterschied zur Fig. 1 besteht darin, daß das Tellerrad 5 hier mit einem Zahnrad 40 verbunden ist, das beispielsweise mit einem nicht dargestellten Zahnrad irgendeines weiteren Antriebes kämmt, und darin, daß die Rolle hier konisch ausgeführt ist, wodurch sich zwischen der Rollbahn 16 und der Rolle 41 kinematisch exakte Verhältnisse ergeben und dadurch außerdem die Stellmutter 25 besser zugänglich ist.

**Patentansprüche**

1. Kegelradgetriebe, bestehend aus einem Ritzel (10) und einem Tellerrad (5), welche von einem Gehäuse (1) umgeben sind, wobei in der Nähe des Ritzel hinter dem Tellerrad eine Abstützvorrichtung vorgesehen ist, **dadurch gekennzeichnet,** daß die Abstützvorrichtung aus einer im Gehäuse (1) drehbar gelagerten Rolle (18) und einer Rollbahn (16) auf der Rückseite des Tellerrades (5) oder eines Teiles (40) des Tellerrades besteht, wobei das Spiel (29) zwischen der Rolle (18) und der Rollbahn (16) einstellbar ist.

2. Kegelradgetriebe nach Anspruch 1, **dadurch gekennzeichnet,** daß die Rolle 18 auf dem exzentrischen Mittelabschnitt (21) eines Bolzens (20) gelagert ist, dessen beide Endabschnitte (22,23) im Gehäuse (1,28) abgestützt sind, wobei ein mit einem Gewinde versehenes Ende (23) aus dem Gehäuse (1) herausragt.

3. Kegelradgetriebe nach Anspruch 1, **dadurch gekennzeichnet,** daß die Rolle (41) konisch und deren Achse (42) gegenüber der Ebene des Tellerrades (5) geneigt ist.

4. Kegelradgetriebe nach Anspruch 1, **dadurch gekennzeichnet,** daß die Rolle 17 durch den zylindrischen Außenring (18) eines Wälzlagers gebildet ist.

Fig.1

Fig.3

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | US-A-2 133 112   (D.D.ORMSBY) <br> * das ganze Dokument * <br> – – – | 1,4,2 | F 16 H 1/40 |
| X,Y | FR-A-405 616   (H.A.BRZESKY) <br> * das ganze Dokument * <br> – – – | 1,4,2 | |
| X | US-A-2 203 292   (F.C.BEST) <br> * das ganze Dokument * <br> – – – – – | 1,3 | |

| RECHERCHIERTE SACHGEBIETE (Int. Cl.5) |
|---|
| F 16 H <br> B 60 K |

Der vorliegende Recherchenbericht wurde für alle Patentansprüche erstellt

| Recherchenort | Abschlußdatum der Recherche | Prüfer |
|---|---|---|
| Berlin | 27 Dezember 91 | GERTIG I. |